# EUROPÄISCHE PATENTSCHRIFT

(11) **EP 2 509 816 B1**
(45) Veröffentlichungstag und Bekanntmachung des Hinweises auf die Patenterteilung: **09.01.2019**
(21) Anmeldenummer: 10787285.5
(22) Anmeldetag: 23.11.2010
(51) Int. Cl.: B60K 35/00

(54) **BEDIENVERFAHREN FÜR EINE ANZEIGEVORRICHTUNG EINES FAHRZEUGS**
OPERATING METHOD FOR A DISPLAY DEVICE OF A VEHICLE
PROCÉDÉ DE COMMANDE POUR UN DISPOSITIF D'AFFICHAGE D'UN VÉHICULE

(30) Priorität: 12.12.2009 DE 102009058145
(43) Veröffentlichungstag der Anmeldung: 17.10.2012
(73) Patentinhaber: Volkswagen AG, 38440 Wolfsburg (DE)
(72) Erfinder: WÄLLER, Christoph, 38106 Braunschweig (DE)
(86) Internationale Anmeldenummer: PCT/EP2010/007099
(87) Internationale Veröffentlichungsnummer: WO 2011/069601

(56) Entgegenhaltungen:
- DE-A1-102007 061 993

## Beschreibung

Die vorliegende Erfindung betrifft ein Bedienverfahren für eine Anzeigevorrichtung eines Fahrzeugs und eine entsprechende Anzeigevorrichtung für ein Fahrzeug. Die vorliegende Erfindung betrifft insbesondere ein Bedienverfahren zum Teilen einer Anzeigefläche der Anzeigevorrichtung, um Ausgaben verschiedener Anwendungen auf der Anzeigevorrichtung darzustellen, wobei das Teilen über eine Geste erfolgt, welche mit Hilfe einer berührungssensitiven Oberfläche der Anzeigevorrichtung erfasst wird.

In Fahrzeugen, wie zum Beispiel Personenkraftwagen oder Lastkraftwagen, werden eine Vielzahl von Informationen von verschiedenen Anwendungen des Fahrzeugs typischerweise auf einer Anzeigevorrichtung des Fahrzeugs mit einer graphischen Anzeige dargestellt. Die Anzeigevorrichtung verfügt häufig über eine berührungssensitive Oberfläche, welche dem Anzeigebereich der Anzeigevorrichtung überlagert ist, um eine Bedienung der verschiedenen Anwendungen zu ermöglichen. Häufig ist es wünschenswert und/oder vorteilhaft, wenn Ausgaben von zwei verschiedenen Anwendungen auf der Anzeigevorrichtung dargestellt werden. Beispielsweise kann auf einem Teilbereich der Anzeigevorrichtung eine Ausgabe von einem Navigationssystem erfolgen, während auf einem anderen Teilbereich der Anzeigevorrichtung Informationen von beispielsweise einem Audiosystem oder einem Datenverwaltungssystem, welches Adressdaten, sogenannte Kontaktdaten, bereitstellt, ausgegeben werden. Eine permanente Teilung der Anzeigefläche der Anzeigevorrichtung in mehrere Teilbereiche hat zur Folge, dass für eine Applikation nur eine kleine Anzeigefläche in einem Teilbereich der Anzeigevorrichtung zur Verfügung steht. Daher ist es wünschenswert, die Anzeigefläche der Anzeigevorrichtung auf einfache Art und Weise dynamisch in Teilbereiche für mehrere Anwendungen aufteilen zu können.

In diesem Zusammenhang ist aus der DE 10 2007 061 993 A1 ein Anzeigeverfahren für ein mobiles Endgerät bekannt. Das mobile Endgerät umfasst eine Anzeigeeinheit mit einer berührungssensitiven Anzeigefläche, auf der ein Menübalken dargestellt wird. Ein Controller grenzt in Abhängigkeit der jeweiligen Position des Menübalkens auf der Anzeigefläche zwei durch den Menübalken voneinander getrennte Anzeigefelder ab. Beispielsweise kann der Benutzer eine Zugbewegung in horizontaler Richtung auf der Anzeigeeinheit ausführen. Der Controller legt die berührte Stellung als die Anzeigestellung des Menübalkens fest und steuert die Anzeigeeinheit so an, dass der horizontale Menübalken an der berührten Stelle angezeigt wird.

Die nachveröffentliche US 2010/0081475 A1 betrifft eine mobile Vorrichtung mit einer Benutzerschnittstelle, welche mehrere Fenster unterstützt. Gemäß einer Ausführungsform wird ein Verfahren, welches von einem System ausgeführt wird, zum Umschalten von einer Einzelfensterbetriebsart in eine Doppelfensterbetriebsart beschrieben. Das Verfahren beginnt zu einer Zeit, zu welcher das System in einer Einzelfensterbetriebsart läuft. Danach empfängt das System eine Teilungsanweisung. Der Übergang zwischen den Betriebsarten kann beispielsweise erfolgen, indem ein Benutzer eine Linie über den berührungssensitiven Bildschirm zieht.

In diesem Zusammenhang offenbart die US 2007/0222769 A1 eine Anzeigevorrichtung, bei welcher ein Berührungserfassungsabschnitt die Stelle auf einem Anzeigebildschirm detektiert, wo ein Benutzerfinger den Anzeigebildschirm berührt. Ein Versetzungslängenberechnungsabschnitt berechnet die Versetzungslänge des Benutzerfingers von der Berührungsstartstelle zu der Berührungsendstelle. Ein Versetzungslängenentscheidungsabschnitt entscheidet, ob die Versetzungslänge größer als eine Referenzversetzungslänge ist oder nicht. Ein Verschiebungsberechnungsabschnitt berechnet die Verschiebung des Benutzerfingers. Ein Verschiebungsentscheidungsabschnitt entscheidet, ob die Verschiebung kleiner als eine vorbestimmte Referenzverschiebung ist oder nicht. Wenn die Versetzungslänge größer als die Referenzversetzungslänge ist und die Verschiebung kleiner als die Referenzverschiebung ist, steuert ein Bildschirmteilungssteuerabschnitt den Betrieb eines Bildanzeigeabschnitts derart an, dass der Anzeigebildschirm geteilt wird.

Wenn bei der aus der US 2007/0222769 A1 offenbarten Anzeigevorrichtung zusätzliche Bedienelemente auf der Anzeigevorrichtung dargestellt werden, welche mit Hilfe einer Berührung durch den Benutzer betätigt werden können, ist es möglich, dass die Geste zum Teilen des Bildschirms nicht eindeutig von einer Bediengeste unterschieden werden kann und daher ein unbeabsichtigtes Teilen des Bildschirms oder eine unbeabsichtigte Betätigung eines Bedienelements auftreten kann.

Aufgabe der vorliegenden Erfindung ist es daher, ein verbessertes Verfahren zum Teilen einer Anzeigefläche eine Anzeigevorrichtung mit Hilfe einer berührungssensitiven Oberfläche bereitzustellen. Darüber hinaus ist es Aufgabe der vorliegenden Erfindung, eine verbesserte Bedienung einer Anzeigevorrichtung bei einer geteilten Anzeigefläche bereitzustellen.

Gemäß der vorliegenden Erfindung werden diese Aufgaben durch ein Bedienverfahren für eine Anzeigevorrichtung eines Fahrzeugs nach Anspruch 1, ein Bedienverfahren für eine Anzeigevorrichtung eines Fahrzeugs nach Anspruch 3, eine Anzeigevorrichtung für ein Fahrzeug nach Anspruch 11 und eine Anzeigevorrichtung für ein Fahrzeug nach Anspruch 12 gelöst. Die abhängigen Ansprüche definieren vorteilhafte und bevorzugte Ausführungsformen der Erfindung.

Gemäß der vorliegenden Erfindung wird ein Bedienverfahren für eine Anzeigevorrichtung eines Fahrzeugs bereitgestellt, wobei die Anzeigevorrichtung eine berührungssensitive Oberfläche umfasst. Bei dem Verfahren wird eine erste Ausgabe von beispielsweise einer ersten Anwendung auf der Anzeigevorrichtung in einem Bereich der Anzeigevorrichtung angezeigt. Der Bereich auf der Anzeigevorrichtung ist durch einen ersten Rand und einen dazu in einer ersten Richtung gegenüberliegenden zweiten Rand sowie durch einen dritten Rand und einen dazu in einer zweiten Richtung gegenüberliegenden vierten Rand begrenzt ist. Eine Bewegung einer Bedienperson relativ zu der berührungssensitiven Oberfläche wird erfasst und der Bereich wird automatisch entlang der ersten Richtung in einen ersten Teilbereich und einen zweiten Teilbereich geteilt, wenn die erfasste Bewegung von dem ersten Rand zu dem zweiten Rand verläuft. Wenn die erfasste Bewegung hingegen von dem dritten Rand zu dem vierten Rand verläuft, wird der Bereich automatisch entlang der zweiten Richtung in einen ersten Teilbereich und einen zweiten Teilbereich geteilt. Auf dem ersten Teilbereich wird weiterhin die erste Ausgabe angezeigt und in dem zweiten Teilbereich wird eine zweite Ausgabe angezeigt. Die erste Ausgabe kann beispielsweise die Ausgabe einer ersten Anwendung und die zweite Ausgabe die Ausgabe einer zweiten Anwendung, welche unterschiedlich zu der ersten Anwendung ist, sein. Die unterschiedlichen Anwendungen können beispielsweise ein Navigationssystem, ein Diagnosesystem des Fahrzeugs, ein Kommunikationssystem des Fahrzeugs, ein Audiosystem des Fahrzeugs oder ein Entertainmentsystem des Fahrzeugs umfassen. Außerhalb des durch die vier Ränder begrenzten Bereichs der Anzeigevorrichtung können weitere Anzeigen vorgesehen sein, wie zum Beispiel eine Statuszeile, welche eine Außentemperatur, eine Uhrzeit oder dergleichen anzeigt. Durch das Teilen des Bereichs in zwei Teilbereiche können Ausgaben von zwei unterschiedlichen Anwendungen gleichzeitig dargestellt werden. Dadurch erhält der Benutzer einen erweiterten Überblick über Funktionen und Zustände des Fahrzeugs. Jeder der neuen Teilbereiche kann wiederum durch Ränder begrenzt sein und durch eine Bewegung der Bedienperson relativ zu der berührungssensitiven Oberfläche von einem Rand zu einem gegenüberliegenden Rand entsprechend weiter unterteilt werden. Dadurch können noch mehr Ausgaben von weiteren Anwendungen gleichzeitig dargestellt werden. Beispielsweise kann auf diese Art und Weise der Bereich in zwei, drei oder vier Teilbereiche unterteilt werden.

Gemäß einer Ausführungsform werden der erste Teilbereich und der zweite Teilbereich wieder automatisch zu dem Bereich verbunden, wenn die erfasste Bewegung entlang einer Trennlinie, welche den ersten Teilbereich von dem zweiten Teilbereich trennt, verläuft. Auf diese Art und Weise ist es einfach und intuitiv möglich, Teilbereiche wieder zu einem Bereich zusammenzufassen. In dem zusammengefassten Bereich wird dann eine Ausgabe von einer der beiden zuvor ausgegebenen Anwendungen dargestellt. Welche Ausgabe von welcher Anwendung auf dem zusammengefassten Bereich dargestellt wird, kann beispielsweise vordefiniert sein oder beispielsweise die Anwendung sein, welche zuletzt in der geteilten Ansicht verwendet wurde.

Gemäß der vorliegenden Erfindung wird ein weiteres Bedienverfahren für eine Anzeigevorrichtung eines Fahrzeugs bereitgestellt. Die Anzeigevorrichtung umfasst eine berührungssensitive Oberfläche. Eine erste Ausgabe wird auf der Anzeigevorrichtung in einem Bereich der Anzeigevorrichtung angezeigt. Eine erste Bewegung und eine zweite Bewegung einer Bedienperson relativ zu der berührungssensitiven Oberfläche werden gleichzeitig erfasst. Der Bereich wird entlang einer ersten Richtung in einen ersten Teilbereich und einen zweiten Teilbereich automatisch geteilt, wenn die erste Bewegung und die zweite Bewegung im Wesentlichen in einer zu der ersten Richtung senkrechten zweiten Richtung verlaufen und sich voneinander entfernen, d.h. in der zweiten Richtung in entgegen gesetzte Richtungen verlaufen. Wenn die erste Bewegung und die zweite Bewegung im Wesentlichen in der ersten Richtung und sich voneinander entfernend verlaufen, wird der Bereich automatisch entlang der zweiten Richtung in einen ersten Teilbereich und einen zweiten Teilbereich geteilt. Auf dem ersten Teilbereich wird die erste Ausgabe angezeigt und auf dem zweiten Teilbereich eine zweite Ausgabe.

Die erste Bewegung und die zweite Bewegung können beispielsweise durch Spreizen von Daumen und Zeigefinger der Bedienperson, welche die berührungssensitive Oberfläche berühren, bewirkt werden. Erfolgt die Spreizbewegung in der ersten Richtung, so wird der Bereich entlang der zweiten Richtung, d.h. senkrecht zu der Spreizbewegung, geteilt. Aus Sicht des Benutzers zieht der Benutzer somit durch seine Spreizbewegung den Bereich auseinander, wodurch er geteilt wird. Mit Hilfe dieser intuitiven Bewegung ist ein einfaches Teilen des Bereichs möglich.

Das Verbinden des ersten Teilbereichs und des zweiten Teilbereichs zu dem gesamten Bereich kann beispielsweise durch der Spreizbewegung entgegen gesetzte Bewegungen bewerkstelligt werden, wenn die erste Bewegung in dem ersten Teilbereich beginnt, die zweite Bewegung in dem zweiten Teilbereich beginnt und die erste und zweite Bewegung im Wesentlichen aufeinander zu verlaufen. Werden die erste Bewegung und die zweite Bewegung wiederum mit Daumen und Zeigefinger bewirkt, kann durch ein aufeinander zu Bewegen von Daumen und Zeigefinger die Teilung aufgehoben werden.

Der Bereich kann entlang einer vorgegebenen Trennlinie entlang der ersten Richtung oder der zweiten Richtung in den ersten Teilbereich und den zweiten Teilbereich geteilt werden. Durch Vorgeben der Trennlinie und Teilen des Bereichs entlang der vorgegebenen Trennlinie wird - sichergestellt, dass die entstehenden Teilbereiche eine geeignete Größe aufweisen. Außerdem wird dadurch ermöglicht, dass die Bedienperson die Teilungsbewegung an einer beliebigen Stelle der Anzeigevorrichtung durchführen kann und trotzdem die Teilbereiche entlang der vorgegebenen Trennlinie geteilt werden. Dadurch wird weniger Präzision bei der Ausführung der Teilungsbewegung von der Bedienperson gefordert.

Gemäß einer Ausführungsform wird beim Anzeigen der ersten Ausgabe auf dem ersten Teilbereich eine Informationsmenge der ersten Ausgabe reduziert, oder es werden Abmessungen von Anzeigen und Bedienflächen der ersten Ausgabe verringert, oder es wird eine Anordnung von Anzeigen und Bedienflächen der ersten Ausgabe geändert. Auf diese Art und Weise kann die Übersichtlichkeit der ersten Ausgabe auch auf dem gegenüber dem gesamten Bereich kleineren ersten Teilbereich sichergestellt werden.

Gemäß einer weiteren Ausführungsform wird eine Annäherung eines Körperteils der Bedienperson an die Anzeigevorrichtung erfasst und in Abhängigkeit der erfassten Annäherung Bedienflächen der ersten oder der zweiten Ausgabe angezeigt. Indem die Bedienflächen der ersten und/oder zweiten Ausgabe nur angezeigt werden, wenn sich die Bedienperson mit einem Körperteil der Anzeigevorrichtung nähert, kann beim normalen Betrachten der Ausgaben auf der Anzeigevorrichtung eine übersichtliche Darstellung ohne Bedienflächen oder mit weniger Bedienflächen erreicht werden und dadurch die Übersichtlichkeit verbessert werden. Sobald sich die Bedienperson der Anzeigevorrichtung nähert, werden weitere Bedienflächen angezeigt.

Ferner kann eine erste Entfernung zwischen einem sich annähernden Körperteil der Bedienperson und dem ersten Teilbereich und eine zweite Entfernung zwischen dem sich annähernden Körperteil der Bedienperson und dem zweiten Teilbereich erfasst werden. In Abhängigkeit der ersten und der zweiten Entfernung werden Bedienflächen der ersten oder der zweiten Ausgabe anzeigt. Beispielsweise können Bedienflächen der ersten Ausgabe angezeigt werden, wenn die erste Entfernung geringer als die zweite Entfernung ist, und es können Bedienflächen der zweiten Ausgabe angezeigt werden, wenn die zweite Entfernung geringer als die erste Entfernung ist. Dadurch werden die Bedienflächen nur in dem Teilbereich angezeigt, welchen die Bedienperson voraussichtlich bedienen möchte.

Gemäß einer weiteren Ausführungsform wird bei dem Bedienverfahren ein Audioausgabesymbol auf der Anzeigevorrichtung angezeigt. Weiterhin wird eine Bewegung der Bedienperson, welche bei dem Audioausgabesymbol beginnt, relativ zu der berührungssensitiven Oberfläche erfasst. Das Audioausgabesymbol wird auf der Anzeigevorrichtung gemäß der erfassten Bewegung bewegt und Audioausgaben, welche dem Teilbereich zugeordnet sind, in dem sich das Audioausgabesymbol befindet, werden auf einem dem Audioausgabesymbol zugeordneten Ausgabemedium ausgegeben. Das Audioausgabemedium kann beispielsweise einen Lautsprecheranschluss oder einen Kopfhöreranschluss umfassen. Wenn auf der Anzeigevorrichtung in dem ersten Teilbereich beispielsweise eine Ausgabe eines Navigationssystems dargestellt wird, und in dem zweiten Teilbereich beispielsweise eine Ausgabe von einem Audiosystem dargestellt wird, kann durch Bewegen des Audioausgabesymbols, beispielsweise des Lautsprecheranschlusses, auf einfache Art und Weise bestimmt werden, von welcher Anwendung Ausgaben auf den Lautsprecheranschluss ausgegeben werden sollen. Wird das Audioausgabesymbol in den Teilbereich des Navigationssystems bewegt, werden Audioausgaben des Navigationssystems über die Lautsprecher des Fahrzeugs ausgegeben. Wird das Audioausgabesymbol in den Teilbereich des Audiosystems bewegt, so werden Ausgaben des Audiosystems, beispielsweise eines Radios oder einer CD, über die Lautsprecher des Fahrzeugs ausgegeben. Ebenso kann mit Hilfe eines weiteren Audioausgabesymbols, beispielsweise für einen Kopfhöreranschluss, eine Audioausgabe für den Kopfhöreranschluss bestimmt werden.

Gemäß der vorliegenden Erfindung wird weiterhin eine Anzeigevorrichtung für ein Fahrzeug bereitgestellt, welche eine Anzeigefläche mit einer berührungssensitiven Oberfläche und eine Verarbeitungseinheit umfasst. Die Verarbeitungseinheit kann derart ausgestaltet sein, dass sie zur Durchführung eines oder mehrerer der zuvor beschriebenen Verfahren ausgestaltet ist. Die Anzeigevorrichtung kann beispielsweise ein Audiosystem, ein Navigationssystem, ein Diagnosesystem und/oder ein Kommunikationssystem des Fahrzeugs umfassen.

Die vorliegende Erfindung wird nachfolgend unter Bezugnahme auf die Zeichnungen anhand bevorzugter Ausführungsformen erläutert.
Figuren 1a-1c zeigen Schritte zum Teilen eines Bereichs einer Anzeigevorrichtung in Teilbereiche gemäß einer Ausführungsform der vorliegenden Erfindung.
Figuren 2a-2b zeigen Schritte zum Teilen eines Teilbereichs in weitere Teilbereiche gemäß einer Ausführungsform der vorliegenden Erfindung.
Figur 3 zeigt ein Teilen eines Bereichs einer Anzeigevorrichtung in zwei Teilbereiche gemäß einer weiteren Ausführungsform der vorliegenden Erfindung.
Figuren 4a-4c zeigen ein Übertragen von Daten mit Hilfe eines Datenobjektsymbols.

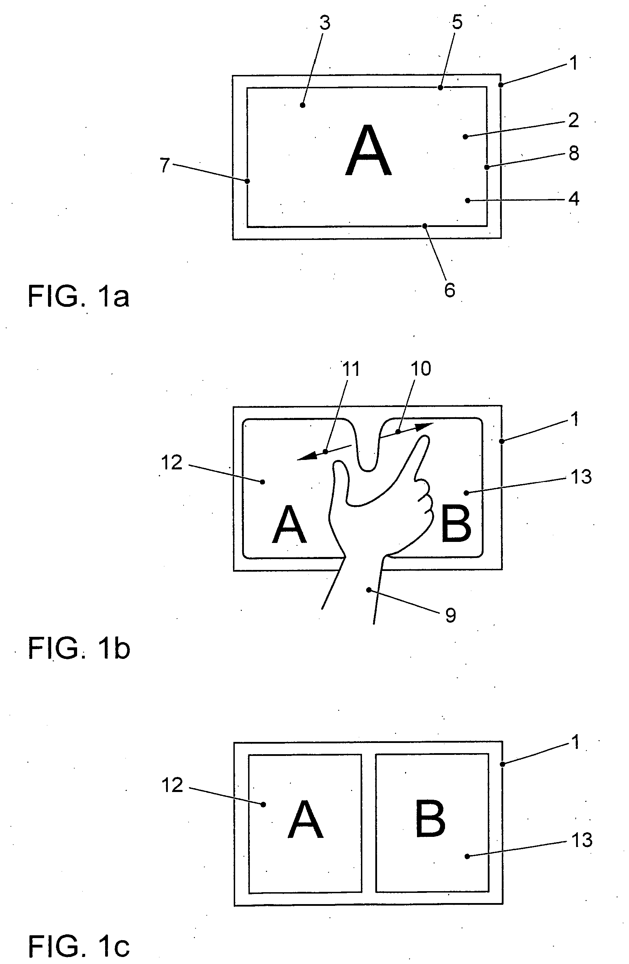

Figur 1a zeigt eine Anzeigevorrichtung 1 gemäß einer Ausführungsform der vorliegenden Erfindung. Die Anzeigevorrichtung 1 umfasst eine Anzeigefläche 2 mit einer darüber liegenden berührungssensitiven Oberfläche 3. Die Anzeigefläche kann beispielsweise eine Flüssigkristallanzeige sein, welche mit Hilfe einer Matrixdarstellung in der Lage ist, sowohl alphanumerische als auch graphische Ausgaben anzuzeigen. Auf der Anzeigefläche 2 ist in Figur 1a ein Anzeigebereich 4 dargestellt, auf welchem eine Ausgabe A von einer Anwendung oder Funktionalität des Fahrzeugs, wie zum Beispiel einem Navigationssystem, einem Audiosystem, einem Kommunikationssystem (z.B. Freisprechanlage) oder einem Entertainmentsystem des Fahrzeugs angezeigt wird. Die Ausgabe A steht in dieser Beschreibung stellvertretend für eine mehr oder weniger umfangreiche Ausgabe einer der zuvor genannten Anwendungen. So kann die Ausgabe A beispielsweise im Fall eines Navigationssystems eine Landkarte mit einer darin eingezeichneten Reiseroute und/oder einer Eingabemaske zum Einstellen eines Navigationsziels umfassen. Der Anzeigebereich 4 ist durch einen oberen ersten Rand 5, einen dazu in einer ersten Richtung gegenüberliegenden zweiten unteren Rand 6, einen dritten linken Rand 7 und einen dazu in einer zweiten Richtung gegenüberliegenden rechten Rand 8 begrenzt. Die gezeigten Ränder 5-8 können beispielsweise mit den Rändern der Anzeigefläche 2 zusammenfallen oder können innerhalb der Ränder der Anzeigefläche 2 liegen, so dass außerhalb der Ränder 5-8 weitere Anzeigebereiche der Anzeigefläche 2 verbleiben. Beispielsweise kann unter dem unteren Rand 6 noch ein Bereich für eine Statuszeile auf der Anzeigefläche 2 verbleiben. In dieser Statuszeile kann beispielsweise eine Temperaturanzeige oder eine Uhrzeit angezeigt werden. Die Ränder 5-8 können beispielsweise als Linien auf der Anzeigevorrichtung 1 dargestellt werden.

Mit Hilfe der berührungssensitiven Oberfläche 3 kann die Anwendung, welche die Ausgabe A bereitstellt, bedient werden, indem beispielsweise Bedienelemente in der Ausgabe A eingeblendet werden, welche von einem Benutzer durch Berühren der berührungssensitiven Oberfiäche 3 betätigt werden können.

Um Informationen von mehreren Anwendungen gleichzeitig auf der Anzeigevorrichtung 1 darstellen zu können, kann der Anzeigebereich 4 in zwei Teilbereiche geteilt werden. Dazu kann der Anwender, wie in Figur 1b gezeigt, durch Ausführen einer Spreizgeste mit zwei Fingern den Anzeigebereich 4 in zwei Teilbereiche 12 und 13 teilen. Dazu berührt der Benutzer 9 beispielsweise die berührungssensitive Oberfläche gleichzeitig mit Daumen und Zeigefinger und bewegt Daumen und Zeigefinger beispielsweise in horizontaler oder vertikaler Richtung voneinander weg. In Figur 1b ist dies durch die Pfeile 10 und 11 gezeigt. Der Zeigefinger der Bedienperson 9 bewegt sich in horizontaler Richtung in Richtung des Pfeils 10 und der Daumen bewegt sich in horizontaler Richtung in die entgegengesetzte Richtung in Richtung des Pfeils 11. Dadurch wird der Anzeigebereich 4 entlang einer vertikalen Richtung in die beiden Teilbereiche 12 und 13 unterteilt. Nach der Spreizbewegung bestehen nunmehr zwei Teilbereiche 12 und 13 auf der Anzeigevorrichtung 1, wie in Figur 1c gezeigt. Die Ausgabe A wird beispielsweise in dem Teilbereich 12 dargestellt und eine Ausgabe B einer weiteren Anwendung wird in dem Teilbereich 13 dargestellt. Die Ausgabe B kann beispielsweise auch ein Auswahlmenü zur Selektion der im Teilbereich 13 anzuzeigenden Anwendung umfassen. Alternativ kann auch automatisch die zuletzt in Teilbereich 13 angezeigte Anwendung in den Teilbereich 13 angezeigt werden. Die Spreizbewegung kann alternativ auch in vertikaler Richtung erfolgen, wodurch der Anzeigebereich 4 entlang einer horizontalen Trennlinie in zwei Teilbereiche unterteilt wird.

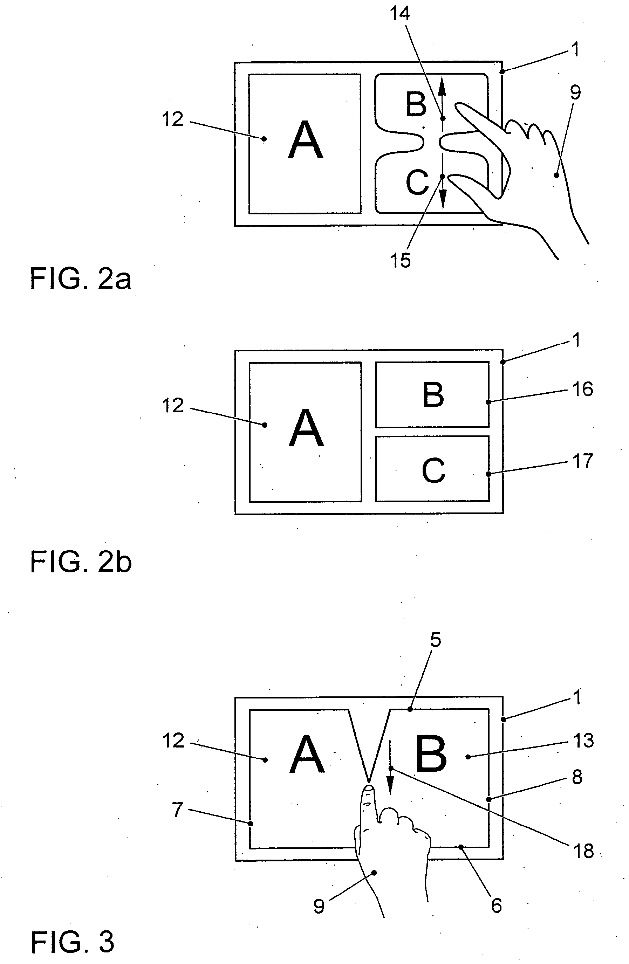

Durch Ausführungen einer weiteren Spreizgeste innerhalb einer der Teilbereiche 12, 13 ist jeweils eine weitere Teilung möglich. Figur 2a zeigt beispielsweise, wie durch eine Spreizgeste der Teilbereich 13 in zwei weitere Teilbereiche geteilt wird. Der Teilbereich 13 der Figur 1c wird, wie in Figur 2a gezeigt, mit Daumen und Zeigefinger der Bedienperson 9 berührt und der Zeigefinger bewegt sich in Richtung des Pfeils 14, wohingegen sich der Daumen in die entgegen gesetzte Richtung des Pfeils 15 über die berührungssensitive Oberfläche 3 bewegt. Durch diese vertikale Spreizung wird der Teilbereich 13 entlang einer horizontalen Trennlinie in zwei Teilbereiche 16 und 17 geteilt. Figur 2b zeigt das Ergebnis dieser Teilung. Auf der Anzeigevorrichtung 1 sind nun drei Teilbereiche dargestellt, welche von drei unterschiedlichen Anwendungen verwendet werden können, um Ausgaben A, B und C in jeweils eigenen Teilbereichen 12, 16 und 17 darstellen zu können. In dem Teilbereich 16 wird beispielsweise die Ausgabe B des zuvor ungeteilten Teilbereichs 13 dargestellt und in dem Teilbereich 17 wird beispielsweise die Ausgabe C von einer weiteren Anwendung dargestellt.

Der Teilbereich 12 kann auf gleiche Art und Weise wie der Teilbereich 13 in zwei weitere Teilbereiche aufgeteilt werden, was jedoch der Übersichtlichkeit halber nicht dargestellt ist. In Abhängigkeit der Größe der Anzeigevorrichtung 1 können weitere Teilungen zugelassen werden. Für Anzeigevorrichtungen mit einer Diagonalen von beispielsweise näherungsweise 25 cm kann die Teilung auf beispielsweise maximal vier Bereiche beschränkt werden. Größere Anzeigevorrichtungen können beispielsweise eine Teilung in sechs oder acht Teilbereiche ermöglichen. Kleinere Anzeigevorrichtungen können hingegen auf eine Teilung in maximal zwei Teilbereiche beschränkt werden.

Die Teilbereiche 12, 13, 16 und 17 können bezüglich ihrer Größe entweder durch die Lage der entsprechenden Teilungsbewegungen, durch welche sie erzeugt werden, oder alternativ mit Hilfe von vordefinierten Trennlinien bestimmt werden. Im Fall der vordefinierten Trennlinien ist es im Fall der Figur 1b egal, in welcher horizontalen Position die Spreizbewegung stattfindet. Die Teilbereiche werden immer entlang der vorbestimmten Trennlinie erzeugt werden.

Durch Ausführen einer Stauchgeste von der Bedienperson 9, bei welcher zwei Finger aufeinander zu bewegt werden, können zwei Teilbereiche wieder zu einem Bereich zusammengefasst werden. Hierzu müssen die Ausgangspositionen der Finger in jeweils einem der betreffenden zusammenzuführenden Teilbereiche liegen. Beispielsweise können ausgehend von Figur 1c die Teilbereiche 12 und 13 zu dem Bereich 4 zusammengefasst werden, indem beispielsweise der Daumen in dem Teilbereich 12 und der Zeigefinger in dem Teilbereich 13 auf der berührungssensitiven Oberfläche aufgesetzt werden. Durch Zusammenführen von Daumen und Zeigefinger in Richtung der Grenze zwischen den Teilbereichen 12 und 13 werden die Teilbereiche 12 und 13 zu dem Bereich 4 der Figur 1a verbunden.

Da die Anzeigefläche der Teilbereiche 12 und 13 kleiner als die Anzeigefläche des gesamten Bereichs 4 ist, kann eine Ausgabe, beispielsweise die Ausgabe A, in Abhängigkeit der zur Verfügung stehenden Anzeigefläche angepasst werden. Beispielsweise kann eine Informationsmenge der Ausgabe A verringert werden, wenn die Ausgabe A in dem Teilbereich 12 dargestellt wird. Ebenso können Anzeigen und Bedienflächen in Abhängigkeit der zur Verfügung stehenden Anzeigefläche vergrößert oder verkleinert werden. Ebenso kann die Anordnung von Anzeigen und Bedienflächen in Abhängigkeit der zur Verfügung stehenden Anzeigefläche und deren Geometrie angepasst werden.

Die Anzeigevorrichtung 1 kann ferner eine Annäherungserkennung umfassen, welche bereits vor einem Kontakt zwischen dem Benutzer 9 und der berührungssensitiven Oberfläche 3 eine Annäherung des Benutzers 9 erfassen kann. In Abhängigkeit der Annäherungserkennung können beispielsweise Bedienflächen, welche Bestandteile der Ausgaben A oder B sind, bei einer Annäherung an die Anzeigevorrichtung 1 vergrößert oder eingeblendet werden. Dadurch kann die Anzeigefläche optimal genutzt werden, da Ausgaben, wie zum Beispiel eine Kartendarstellung, nur durch Bedienelemente verdeckt werden, wenn sich der Benutzer 9 der Anzeigevorrichtung 1 nähert.

Darüber hinaus kann die Annäherungserkennung derart ausgestaltet sein, dass sie eine individuelle Annäherung an die jeweiligen Teilbereiche erkennen kann. Nähert sich die Bedienperson 9 beispielsweise dem Teilbereich 12 der Figur 1c, so werden nur in der Ausgabe A in Abhängigkeit von der Entfernung der Bedienperson 9 zu dem Teilbereich 12 beispielsweise Bedienelemente vergrößert dargestellt. Nähert sich die Bedienperson 9 hingegen dem Teilbereich 13, so werden Bedienelemente der Ausgabe B in Abhängigkeit dieser Annäherung vergrößert dargestellt.

Figur 3 zeigt eine weitere Ausführungsform für ein Verfahren zum Teilen einer Anzeige auf einer Anzeigevorrichtung 1. Der Grundzustand der Anzeigevorrichtung 1 entspricht dem, welcher im Zusammenhang mit Figur 1a beschrieben wurde. Zum Teilen des Anzeigebereichs 4 berührt der Benutzer 9 einen der Ränder 5-8 und führt eine berührende Bewegung bis zu dem gegenüber liegenden Rand 5-8 auf der berührungssensitiven Oberfläche 3 aus. In dem in Figur 3 gezeigten Beispiel hat der Benutzer 9 beispielsweise den oberen Rand 5 berührt und fährt von dort ausgehend mit einem Finger in Richtung des Pfeils 18 zu dem unteren Rand 6. Dadurch wird der Bereich 4 in zwei Teilbereiche 12 und 13 entlang einer vertikalen Trennlinie von dem Rand 5 zu dem Rand 6 geteilt. Das Ergebnis der Teilung entspricht dem, welches im Zusammenhang mit Figur 1c beschrieben wurde. Alternativ kann der Benutzer 9 auch eine horizontale Bewegung zwischen den Rändern 7 und 8 ausführen, um eine Teilung des Bereichs 4 entlang einer horizontalen Trennlinie zu bewirken. Die Teilbereiche 12 und 13 können, wie im Zusammenhang mit Figur 2b beschrieben, ebenfalls weiter unterteilt werden, indem der Benutzer eine berührende Bewegung von einem Rand zu einem gegenüber liegenden Rand des zu teilenden Teilbereichs durchführt.

Anwendungen, welche die Ausgaben A, B oder C bereitstellen, benötigen häufig auch Audioausgaben, welche gleichzeitig zu der Anzeige auszugeben sind. Beispiele für derartige Anwendungen sind ein Audiosystem, eine Freisprechanlage, ein Medienwidergabesystem oder ein Navigationssystem. Ein Audioausgabesystem des Fahrzeugs kann beispielsweise mehrere Lautsprecher im Fahrzeug sowie einen oder mehrere Kopfhöreranschlüsse umfassen. Durch ein Symbol, welches die Lautsprecher oder einen der Kopfhöreranschlüsse des Audiosystems bezeichnet, kann eine aktuelle Zuordnung von den Lautsprechern und von den Kopfhöreranschlüssen zu den Anwendungen dargestellt werden, indem in den entsprechenden Ausgaben A, B oder C das entsprechende Symbol angezeigt wird. So kann beispielsweise eine Anwendung in der Ausgabe A ein Lautsprechersymbol anzeigen, eine weitere Anwendung in der Ausgabe B ein Kopfhörersymbol anzeigen und noch eine weitere Anwendung in der zugeordneten Ausgabe C kein Audioausgabesymbol anzeigen. Möchte der Benutzer die Lautsprecher beispielsweise der Anwendung C zuordnen, so berührt er das Lautsprechersymbol in der Ausgabe A und bewegt dieses Symbol durch eine berührende Bewegung in Richtung der Ausgabe C.

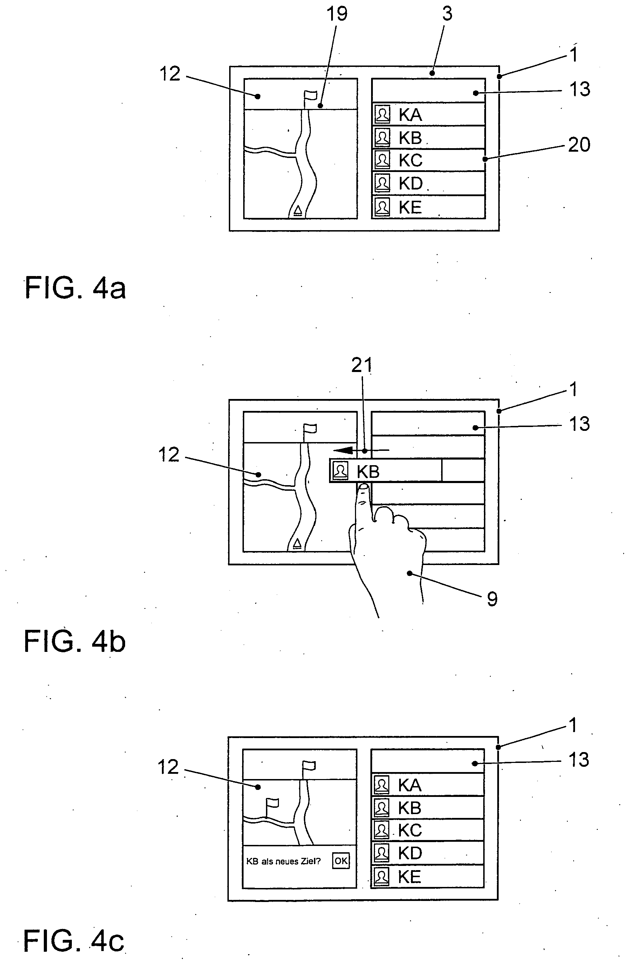

Ausgehend von der in Figur 1c gezeigten geteilten Darstellung mit den Teilbereichen 12 und 13 wird nachfolgend beschrieben werden, wie auf einfache Art und Weise Informationen zwischen zwei Anwendungen, welche ihre Ausgaben A und B auf den Teilbereichen 12 und 13 darstellen, ausgetauscht werden können. Figur 4a zeigt im Teilbereich 12 schematisch eine Kartendarstellung 19 eines Navigationssystems. In Teilbereich 13 ist eine Kontaktliste 20 von beispielsweise einem Adressbuch einer Freisprechanlage des Fahrzeugs dargestellt. Die Kontaktliste 20 umfasst mehrere Einträge KA, KB, KC, KD und KE. Jedem Eintrag kann beispielsweise ein Name, eine Telefonnummer und eine Adresse zugeordnet sein. Die Bedienung der Freisprecheinrichtung erfolgt über Ausgaben und Bedienelemente in den Teilbereich 13. Jeder Eintrag KA-KE stellt zusätzlich ein sogenanntes Datenobjektsymbol dar. Durch Bewegen eines Datenobjektsymbols, wie zum Beispiel dem Adresseintrag KB, von dem Teilbereich 13 in den Teilbereich 12 kann eine Zieladresse für das Navigationssystem eingestellt werden. Dazu berührt die Bedienperson 9 das Datenobjektsymbol KB in dem Teilbereich 13 und führt es mit Hilfe einer berührenden Bewegung über die berührungssensitive Oberfläche 3 von dem Teilbereich 13 in den Teilbereich 12, wie durch den Pfeil 21 in Figur 4b dargestellt. Daraufhin wird in dem Teilbereich 12, wie in Figur 4c gezeigt, eine Bestätigung von der Bedienperson 9 angefordert, ob die Adresse des übertragenen Datenobjektsymbols KB als neues Ziel verwendet werden soll. Das Betätigen der Bedienfläche "OK" in dem Teilbereich 12 wird das neue Ziel bestätigt und eine entsprechende Route von dem Navigationssystem berechnet.

Das Übertragen einer Adressinformation von beispielsweise einer Freisprecheinrichtung zu beispielsweise einem Navigationssystem, wie es im Zusammenhang mit den Figuren 4a-4c zuvor beschrieben wurde, ist nur beispielhaft. Weitere Beispiele sind:
- Übertragen eines bedeutsamen Punkts auf einer Landkarte, eines sogenannten Point of Interest (POI), in eine Kontaktliste von zum Beispiel einem Adressbuch, um diesen POI als Kontakt in dem Adressbuch zu speichern;
- Übertragen eines Musiktitels, welcher beispielsweise von einer Radioanwendung angezeigt wird, auf eine Anwendung einer Abspielvorrichtung zum Abspielen von beliebigen Medien, um beispielsweise in der Abspielvorrichtung nach Musiktiteln mit ähnlichem Klangbild zu suchen und diese abzuspielen oder um diesen Musiktitel beispielsweise über das Internet und eine entsprechende Datenverbindung zu erwerben und in der Abspielvorrichtung zu speichern;
- Übertragen eines Wartungshinweises des Fahrzeugs von einer Anwendung, die Fahrzeugdaten bereitstellt, in ein Navigationssystem des Fahrzeugs, um Werkstätten auf einer Landkarte des Navigationssystems anzuzeigen, welche geeignet sind, Wartungsmaßnahmen gemäß dem Wartungshinweis an dem Fahrzeug auszuführen;
- Übertragen eines Termins aus einer Terminkalenderanwendung in eine Navigationsanwendung, um einen Ort des Termins als Ziel für das Navigationssystem zu programmieren;
- Übertragen eines Termins einer Terminkalenderanwendung zu einer Adressbuchanwendung, um Beteiligte des Termins als Kontakte in dem Adressbuch zu speichern.

## Patentansprüche

1. Bedienverfahren für eine Anzeigevorrichtung eines Fahrzeugs, wobei die Anzeigevorrichtung (1) eine berührungssensitive Oberfläche (3) aufweist, umfassend:
- Anzeigen einer ersten Ausgabe (A) auf der Anzeigevorrichtung (1) in einem Bereich (4) der Anzeigevorrichtung (1), wobei der Bereich (4) durch einen ersten Rand (5) und einen dazu in einer ersten Richtung gegenüberliegenden zweiten Rand (6) sowie durch einen dritten Rand (7) und einen dazu in einer zweiten Richtung gegenüberliegenden vierten Rand (8) begrenzt ist,
- Erfassen einer Bewegung (18) einer Bedienperson (9) relativ zu der berührungssensitiven Oberfläche (3), **gekennzeichnet durch**
- automatisches Teilen des Bereichs (4) entlang der ersten Richtung in einen ersten Teilbereich (12) und einen zweiten Teilbereich (13), wenn die erfasste Bewegung von dem ersten (5) Rand zu dem zweiten Rand (6) verläuft,
- automatisches Teilen des Bereichs (4) entlang der zweiten Richtung in einen ersten Teilbereich und einen zweiten Teilbereich, wenn die erfasste Bewegung von dem dritten (7) Rand zu dem vierten Rand (8) verläuft, und
- Anzeigen der ersten Ausgabe (A) auf dem ersten Teilbereich (12) und Anzeigen einer zweiten Ausgabe (B) auf dem zweiten Teilbereich (13).

2. Bedienverfahren nach Anspruch 1, ferner umfassend:
- automatisches Verbinden des ersten Teilbereichs (12) und des zweiten Teilbereichs (13) zu dem Bereich (4), wenn die erfasste Bewegung entlang einer Trennlinie, welche den ersten Teilbereich (12) von dem zweiten Teilbereich (13) trennt, verläuft.

3. Bedienverfahren für eine Anzeigevorrichtung eines Fahrzeugs, wobei die Anzeigevorrichtung (1) eine berührungssensitive Oberfläche (3) aufweist, umfassend:
- Anzeigen einer ersten Ausgabe (A) auf der Anzeigevorrichtung (1) in einem Bereich (4) der Anzeigevorrichtung (1),
- gleichzeitiges Erfassen einer ersten (10) und einer zweiten (11) Bewegung einer Bedienperson (9) relativ zu der berührungssensitiven Oberfläche (3), **gekennzeichnet durch**
- automatisches Teilen des Bereichs (4) entlang einer ersten Richtung in einen ersten Teilbereich (12) und einen zweiten Teilbereich (13), wenn die erste Bewegung (10) und die zweite Bewegung (11) im Wesentlichen in einer zu der ersten Richtung senkrechten zweiten Richtung und sich voneinander entfernend verlaufen,
- automatisches Teilen des Bereichs (4) entlang der zweiten Richtung in einen ersten Teilbereich und einen zweiten Teilbereich, wenn die erste Bewegung und die zweite Bewegung im Wesentlichen in der ersten Richtung und sich voneinander entfernend verlaufen, und
- Anzeigen der ersten Ausgabe (A) auf dem ersten Teilbereich (12) und Anzeigen einer zweiten Ausgabe (B) auf dem zweiten Teilbereich (13).

4. Bedienverfahren nach Anspruch 3, ferner umfassend:
- Verbinden des ersten Teilbereichs (12) und des zweiten Teilbereichs (13) zu dem Bereich (4), wenn die erste Bewegung in dem ersten Teilbereich (12) beginnt, die zweite Bewegung in dem zweiten Teilbereich (13) beginnt, und die erste und zweite Bewegung im Wesentlichen aufeinander zu verlaufen.

5. Bedienverfahren nach einem der vorhergehenden Ansprüche, **dadurch gekennzeichnet, dass** der Bereich (4) entlang einer vorgegebenen Trennlinie entlang der ersten oder der zweiten Richtung in den ersten Teilbereich (12) und den zweiten Teilbereich (13) geteilt wird.

6. Bedienverfahren nach einem der vorhergehenden Ansprüche, **dadurch gekennzeichnet, dass** das Anzeigen der ersten Ausgabe (A) auf dem ersten Teilbereich (12) umfasst:
- Reduzieren einer Informationsmenge der ersten Ausgabe (A),
- Reduzieren von Abmessungen von Anzeigen und Bedienflächen der ersten Ausgabe (A), und/oder
- Ändern einer Anordnung von Anzeigen und Bedienflächen der ersten Ausgabe (A).

7. Bedienverfahren nach einem der vorhergehenden Ansprüche, ferner umfassend:
- Erfassen einer Annährung eines Körperteils (9) der Bedienperson an die Anzeigevorrichtung (1), und
- Anzeigen von Bedienflächen der ersten (A) und/oder zweiten (B) Ausgabe in Abhängigkeit der erfassten Annäherung.

8. Bedienverfahren nach einem der vorhergehenden Ansprüche, ferner umfassend:
- Erfassen einer ersten Entfernungen zwischen einem sich annähernden Körperteil (9) der Bedienperson und dem ersten Teilbereich (12),
- Erfassen einer zweiten Entfernungen zwischen dem sich annähernden Körperteil (9) der Bedienperson und dem zweiten Teilbereich (13), und
- Anzeigen von Bedienflächen der ersten (A) oder der zweiten (B) Ausgabe in Abhängigkeit der ersten und der zweite Entfernung.

9. Bedienverfahren nach einem der vorhergehenden Ansprüche, ferner umfassend:
- Anzeigen eines Audioausgabesymbols auf der Anzeigevorrichtung (1), wobei die Anzeigevorrichtung (1) eine berührungssensitive Oberfläche (3) aufweist,
- Erfassen einer Bewegung der Bedienperson (9) relativ zu der berührungssensitiven Oberfläche (3), welche bei dem Audioausgabesymbol beginnt,
- Bewegen des Audioausgabesymbols auf der Anzeigevorrichtung (1) gemäß der erfassten Bewegung, und
- Ausgeben von Audioausgaben, welche dem Teilbereich (12, 13) zugeordnet sind, in dem sich das Audioausgabesymbol befindet, auf einem dem Audioausgabesymbol zugeordneten Audioausgabemedium.

10. Bedienverfahren nach Anspruch 9, **dadurch gekennzeichnet, dass** das Audioausgabemedium einen Lautsprecheranschluss und/oder einen Kopfhöreranschluss umfasst.

11. Anzeigevorrichtung für ein Fahrzeug, umfassend:
- eine Anzeigefläche (2) mit einer berührungssensitiven Oberfläche (3), und
- eine Verarbeitungseinheit, welche ausgestaltet ist,
- eine erste Ausgabe (A) auf der Anzeigevorrichtung (1) in einem Bereich (4) der Anzeigevorrichtung (1) anzuzeigen, wobei der Bereich (4) durch einen ersten Rand (5) und einen dazu in einer ersten Richtung gegenüberliegenden zweiten Rand (6) sowie durch einen dritten Rand (7) und einen dazu in einer zweiten Richtung gegenüberliegenden vierten Rand (8) begrenzt ist, und
- eine Bewegung (18) einer Bedienperson (9) relative zu der berührungssensitiven Oberfläche (3) zu erfassen,
**dadurch gekennzeichnet, dass** die Verarbeitungseinheit ferner ausgestaltet ist,
- den Bereich (4) entlang der ersten Richtung in einen ersten Teilbereich (12) und einen zweiten Teilbereich (13) zu teilen, wenn die erfasste Bewegung (18) von dem ersten Rand (5) zu dem zweiten Rand (6) verläuft,
- den Bereich (4) entlang der zweiten Richtung in einen ersten Teilbereich und einen zweiten Teilbereich zu teilen, wenn die erfasste Bewegung von dem dritten Rand (7) zu dem vierten Rand (8) verläuft, und
- die erste Ausgabe (A) auf dem ersten Teilbereich (12) anzuzeigen und eine zweite Ausgabe (B) auf dem zweiten Teilbereich (13) anzuzeigen.

12. Anzeigevorrichtung für ein Fahrzeug, umfassend:
- eine Anzeigefläche (2) mit einer berührungssensitiven Oberfläche (3), und
- eine Verarbeitungseinheit, welche ausgestaltet ist,
- eine erste Ausgabe (A) auf der Anzeigevorrichtung (1) in einem Bereich (4) der Anzeigevorrichtung (1) anzuzeigen, und
- eine erste (10) und eine zweite (11) Bewegung einer Bedienperson (9) relativ zu der berührungssensitiven Oberfläche (3) gleichzeitig zu erfassen,
**dadurch gekennzeichnet, dass** die Verarbeitungseinheit ferner ausgestaltet ist,
- den Bereich (4) entlang einer ersten Richtung in einen ersten Teilbereich (12) und einen zweiten Teilbereich (13) zu teilen, wenn die erste Bewegung (10) und die zweite Bewegung (11) im Wesentlichen in einer zu der ersten Richtung senkrechten zweiten Richtung und sich voneinander entfernend verlaufen,
- den Bereich (4) entlang der zweiten Richtung in einen ersten Teilbereich und einen zweiten Teilbereich zu teilen, wenn die erste Bewegung und die zweite Bewegung im Wesentlichen in der ersten Richtung und sich voneinander entfernend verlaufen, und
- die erste Ausgabe (A) auf dem ersten Teilbereich (12) anzuzeigen und eine zweite Ausgabe (B) auf dem zweiten Teilbereich (13) anzuzeigen.

13. Anzeigevorrichtung nach einem der Ansprüche 11 oder 12, **dadurch gekennzeichnet, dass** die Anzeigevorrichtung (1) zur Durchführung des Verfahrens nach einem der Ansprüche 1-10 ausgestaltet ist.

14. Anzeigevorrichtung nach einem der Ansprüche 11-13, **dadurch gekennzeichnet, dass** die Anzeigevorrichtung (1) ein Audiosystem, ein Navigationssystem, ein Diagnosesystem und/oder ein Kommunikationssystem des Fahrzeugs umfasst.

## Claims

1. Operator control method for a display apparatus of a vehicle, wherein the display apparatus (1) has a touch-sensitive surface (3), comprising:
- displaying a first output (A) on the display apparatus (1) in a region (4) of the display apparatus (1), wherein the region (4) is bounded by a first border (5) and a second border (6), opposite the latter in a first direction, and also by a third border (7) and a fourth border (8), opposite the latter in a second direction,
- detecting a movement (18) of an operator (9) relative to the touch-sensitive surface (3), **characterized by**
- automatically dividing the region (4) along the first direction into a first subregion (12) and a second subregion (13) if the detected movement runs from the first border (5) to the second border (6),
- automatically dividing the region (4) along the second direction into a first subregion and a second subregion if the detected movement runs from the third border (7) to the fourth border (8), and
- displaying the first output (A) on the first subregion (12) and displaying a second output (B) on the second subregion (13).

2. Operator control method according to Claim 1, further comprising:
- automatically connecting the first subregion (12) and the second subregion (13) to produce the region (4) if the detected movement runs along a separating line separating the first subregion (12) from the second subregion (13).

3. Operator control method for a display apparatus of a vehicle, wherein the display apparatus (1) has a touch-sensitive surface (3), comprising:
- displaying a first output (A) on the display apparatus (1) in a region (4) of the display apparatus (1),
- simultaneously detecting a first (10) and a second (11) movement of an operator (9) relative to the touch-sensitive surface (3), **characterized by**
- automatically dividing the region (4) along a first direction into a first subregion (12) and a second subregion (13) if the first movement (10) and the second movement (11) run substantially in a second direction, perpendicular to the first direction, and in a manner diverging from one another,
- automatically dividing the region (4) along the second direction into a first subregion and a second subregion if the first movement and the second movement run substantially in the first direction and in a manner diverging from one another, and
- displaying the first output (A) on the first subregion (12) and displaying a second output (B) on the second subregion (13).

4. Operator control method according to Claim 3, further comprising:
- connecting the first subregion (12) and the second subregion (13) to produce the region (4) if the first movement begins in the first subregion (12), the second movement begins in the second subregion (13) and the first and second movements run substantially towards one another.

5. Operator control method according to one of the preceding claims, **characterized in that** the region (4) is divided along a prescribed separating line along the first or the second direction into the first subregion (12) and the second subregion (13).

6. Operator control method according to one of the preceding claims, **characterized in that** the displaying of the first output (A) on the first subregion (12) comprises:
- reducing a volume of information of the first output (A),
- reducing dimensions of displays and control panels of the first output (A), and/or
- changing an arrangement of displays and control panels of the first output (A).

7. Operator control method according to one of the preceding claims, further comprising:
- detecting an approach by a body part (9) of the operator towards the display apparatus (1), and
- displaying control panels of the first (A) and/or second (B) outputs on the basis of the detected approach.

8. Operator control method according to one of the preceding claims, further comprising:
- detecting a first distances between an approaching body part (9) of the operator and the first subregion (12),
- detecting a second distances between the approaching body part (9) of the operator and the second subregion (13), and
- displaying control panels of the first (A) or the second (B) output on the basis of the first and second distances.

9. Operator control method according to one of the preceding claims, further comprising:
- displaying an audio output symbol on the display apparatus (1), wherein the display apparatus (1) has a touch-sensitive surface (3),
- detecting a movement of the operator (9) relative to the touch-sensitive surface (3) that begins at the audio output symbol,
- moving the audio output symbol on the display apparatus (1) according to the detected movement, and
- outputting audio outputs associated with the subregion (12, 13) in which the audio output symbol is located on an audio output medium associated with the audio output symbol.

10. Operator control method according to Claim 9, **characterized in that** the audio output medium comprises a loudspeaker connection and/or a headphone connection.

11. Display apparatus for a vehicle, comprising:
- a display panel (2) having a touch-sensitive surface (3), and
- a processing unit configured
- to display a first output (A) on the display apparatus (1) in a region (4) of the display apparatus (1), wherein the region (4) is bounded by a first border (5) and a second border (6), opposite the latter in a first direction, and also by a third border (7) and a fourth border (8), opposite the latter in a second direction, and
- to detecte a movement (18) of an operator (9) relative to the touch-sensitive surface (3), **characterized in that** the processing unit is further configured
- to divide the region (4) along the first direction into a first subregion (12) and a second subregion (13) if the detected movement (18) runs from the first border (5) to the second border (6),
- to divide the region (4) along the second direction into a first subregion and a second subregion if the detected movement runs from the third border (7) to the fourth border (8), and
- to display the first output (A) on the first subregion (12) and to display a second output (B) on the second subregion (13).

12. Display apparatus for a vehicle, comprising:
- a display panel (2) having a touch-sensitive surface (3), and
- a processing unit configured
- to display a first output (A) on the display apparatus (1) in a region (4) of the display apparatus (1), and
- to detecte a first (10) and a second (11) movement of an operator (9) relative to the touch-sensitive surface (3) simultaneously,
**characterized in that** the processing unit is further configured
- to divide the region (4) along a first direction into a first subregion (12) and a second subregion (13) if the first movement (10) and the second movement (11) run substantially in a second direction, perpendicular to the first direction, and in a manner diverging from one another,
- to divide the region (4) along the second direction into a first subregion and a second subregion if the first movement and the second movement run substantially in the first direction and in a manner diverging from one another, and
- to display the first output (A) on the first subregion (12) and to display a second output (B) on the second subregion (13).

13. Display apparatus according to either of Claims 11 and 12, **characterized in that** the display apparatus (1) is configured to perform a method according to one of Claims 1-10.

14. Display apparatus according to one of Claims 11-13, **characterized in that** the display apparatus (1) comprises an audio system, a navigation system, a diagnosis system and/or a communication system of the vehicle.

## Revendications

1. Procédé de commande pour un dispositif d'affichage d'un véhicule, dans lequel le dispositif d'affichage (1) comporte une surface tactile (3) comprenant :
- l'affichage d'une première sortie (A) sur le dispositif d'affichage (1) dans une zone (4) du dispositif d'affichage (1), la zone (4) étant délimitée par un premier bord (5) et un deuxième bord (6) opposé à celui-ci dans une première direction et par un troisième bord (7) et un quatrième bord (8) opposé à celui-ci dans une deuxième direction,
- la détection d'un mouvement (18) d'un opérateur (9) par rapport à la surface tactile (3), **caractérisé par**
- la division automatique de la zone (4) le long de la première direction en une première zone partielle (12) et une deuxième zone partielle (13) lorsque le mouvement détecté s'étend du premier (5) bord vers le deuxième bord (6),
- la division automatique de la zone (4) le long de la deuxième direction en une première zone partielle et une deuxième zone partielle lorsque le mouvement détecté s'étend du troisième (7) bord vers le quatrième bord (8), et
- l'affichage de la première sortie (A) sur la première zone partielle (12) et l'affichage d'une deuxième sortie (B) sur la deuxième zone partielle (13).

2. Procédé de commande selon la revendication 1, comprenant en outre :
- la liaison automatique de la première zone partielle (12) et de la deuxième zone partielle (13) à la zone (4) lorsque le mouvement détecté s'étend le long d'une ligne de séparation qui sépare ladite première zone partielle (12) de la deuxième zone partielle (13).

3. Procédé de commande pour un dispositif d'affichage d'un véhicule, dans lequel le dispositif d'affichage (1) comporte une surface tactile (3), comprenant :
- l'affichage d'une première sortie (A) sur le dispositif d'affichage (1) dans une zone (4) du dispositif d'affichage (1),
- la détection simultanée d'un premier (10) et d'un deuxième (11) mouvement d'un opérateur (9) par rapport à la surface tactile (3), **caractérisé par**
- la division automatique de la zone (4) le long d'une première direction en une première zone partielle (12) et une deuxième zone partielle (13) lorsque le premier mouvement (10) et le deuxième mouvement (11) sont sensiblement dans une deuxième direction perpendiculaire à la première direction et s'éloignent l'un de l'autre,
- la division automatique de la zone (4) le long de la deuxième direction en une première zone partielle et une deuxième zone partielle lorsque le premier mouvement et le deuxième mouvement sont sensiblement dans la première direction et s'éloignent l'un de l'autre, et
- l'affichage de la première sortie (A) sur la première zone partielle (12) et l'affichage d'une deuxième sortie (B) sur la deuxième zone partielle (13).

4. Procédé de commande selon la revendication 3, comprenant en outre :
- la liaison de la première zone partielle (12) et de la deuxième zone partielle (13) à la zone (4) lorsque le premier mouvement commence dans la première zone partielle (12), lorsque le deuxième mouvement commence dans la deuxième zone partielle (13) et lorsque les premier et deuxième mouvements s'étendent sensiblement l'un vers l'autre.

5. Procédé de commande selon l'une des revendications précédentes, **caractérisé en ce que** la zone (4) est divisée le long d'une ligne de séparation prédéterminée le long de la première ou de la deuxième direction en la première zone partielle (12) et la deuxième zone partielle (13).

6. Procédé de commande selon l'une des revendications précédentes, **caractérisé en ce que** l'affichage de la première sortie (A) sur la première zone partielle (12) comprend :
- la réduction d'une quantité d'informations de la première sortie (A),
- la réduction des dimensions des affichages et des surfaces de commande de la première sortie (A), et/ou
- la modification d'un agencement des affichages et des surfaces de commande de la première sortie (A).

7. Procédé de commande selon l'une des revendications précédentes, comprenant en outre :
- la détection d'un rapprochement d'une partie corporelle (9) de l'opérateur du dispositif d'affichage (1), et
- l'affichage de surfaces de commande de la première (A) et/ou de la deuxième (B) sortie en fonction du rapprochement détecté.

8. Procédé de commande selon l'une des revendications précédentes, comprenant en outre :
- la détection d'une première distances entre une partie corporelle (9) de l'opérateur se rapprochant et la première zone partielle (12),
- la détection d'une deuxième distances entre la partie corporelle (9) de l'opérateur se rapprochant et la deuxième zone partielle (13), et
- l'affichage de surfaces de commande de la première (A) ou de la deuxième (B) sortie en fonction des première et deuxième distances.

9. Procédé de commande selon l'une des revendications précédentes, comprenant en outre :
- l'affichage d'un symbole de sortie audio sur le dispositif d'affichage (1), dans lequel le dispositif d'affichage (1) comporte une surface tactile (3),
- la détection d'un mouvement de l'opérateur (9) par rapport à la surface tactile (3), qui commence au niveau du symbole de sortie audio,
- le déplacement du symbole de sortie audio sur le dispositif d'affichage (1) conformément au mouvement détecté, et
- l'envoi de sorties audio associées à la zone partielle (12, 13) dans laquelle se trouve le symbole de sortie audio, sur un support de sortie audio associé au symbole de sortie audio.

10. Procédé de commande selon la revendication 9, **caractérisé en ce que** le support de sortie audio comprend un connecteur de haut-parleur et/ou un connecteur de casque d'écoute.

11. Dispositif d'affichage pour un véhicule, comprenant :
- une surface d'affichage (2) comportant une surface tactile (3), et
- une unité de traitement conçue pour
- afficher une première sortie (A) sur le dispositif d'affichage (1) dans une zone (4) du dispositif d'affichage (1), la zone (4) étant délimitée par un premier bord (5) et un deuxième bord (6) opposé à celui-ci dans une première direction et par un troisième bord (7) et un quatrième bord (8) opposé à celui-ci dans une deuxième direction, et
- pour détecter un mouvement (18) d'un opérateur (9) par rapport à la surface tactile (3),
**caractérisé en ce que** l'unité de traitement est en outre conçue
- pour diviser la zone (4) le long de la première direction en une première zone partielle (12) et une deuxième zone partielle (13) lorsque le mouvement détecté (18) s'étend du premier bord (5) vers le deuxième bord (6),
- pour diviser la zone (4) le long de la deuxième direction en une première zone partielle et une deuxième zone partielle lorsque le mouvement détecté s'étend du troisième bord (7) vers le quatrième bord (8), et
- pour afficher la première sortie (A) sur la première zone partielle (12) et afficher une deuxième sortie (B) sur la deuxième zone partielle (13).

12. Dispositif d'affichage pour un véhicule, comprenant :
- une surface d'affichage (2) comportant une surface tactile (3), et
- une unité de traitement conçue pour
- afficher une première sortie (A) sur le dispositif d'affichage (1) dans une zone (4) du dispositif d'affichage (1), et
- pour détecter simultanément un premier (10) et un deuxième (11) mouvement d'un opérateur (9) par rapport à la surface tactile (3),
**caractérisé en ce que** l'unité de traitement est en outre conçue
- pour diviser la zone (4) le long d'une première direction en une première zone partielle (12) et une deuxième zone partielle (13) lorsque le premier mouvement (10) et le deuxième mouvement (11) s'étendent sensiblement dans une deuxième direction perpendiculaire à la première direction et s'éloignent l'un de l'autre,
- pour diviser la zone (4) le long de la deuxième direction en une première zone partielle et une deuxième zone partielle lorsque le premier mouvement et le deuxième mouvement s'étendent sensiblement dans la première direction et s'éloignent l'un de l'autre, et
- pour afficher la première sortie (A) sur la première zone partielle (12) et afficher une deuxième sortie (B) sur la deuxième zone partielle (13).

13. Dispositif d'affichage selon l'une des revendications 11 ou 12, **caractérisé en ce que** le dispositif d'affichage (1) est conçu pour la mise en oeuvre du procédé selon l'une des revendications 1-10.

14. Dispositif d'affichage selon l'une des revendications 11-13, **caractérisé en ce que** le dispositif d'affichage (1) comprend un système audio, un système de navigation, un système de diagnostic et/ou un système de communication du véhicule.
